## Europäisches Patentamt

(19) **European Patent Office**

**Office européen des brevets**

(11) Numéro de publication: **0 246 550**

**B1**

(12) **FASCICULE DE BREVET EUROPEEN**

(45) Date de publication du fascicule du brevet: **16.01.91**

(51) Int. Cl.⁵: **H 02 N 15/00**

(21) Numéro de dépôt: **87106891.2**

(22) Date de dépôt: **12.05.87**

(54) Dispositif de sustentation électromagnétique.

(30) Priorité: **14.05.86 FR 8606933**

(43) Date de publication de la demande:
**25.11.87 Bulletin 87/48**

(45) Mention de la délivrance du brevet:
**16.01.91 Bulletin 91/03**

(84) Etats contractants désignés:
**AT BE CH DE FR GB IT LI LU NL SE**

(56) Documents cités:
**DE-A-2 412 221**
**FR-A-1 426 389**
**US-A-4 331 896**

(73) Titulaire: **GEC ALSTHOM SA**
**38, avenue Kléber**
**F-75116 Paris (FR)**

(72) Inventeur: **Delassus, Jean**
**31 rue des Carrières**
**F-95160 Montmorency (FR)**

(74) Mandataire: **Weinmiller, Jürgen et al**
**Lennéstrasse 9 Postfach 24**
**D-8133 Feldafing (DE)**

Courier Press, Leamington Spa, England.

**Description**

La sustentation électromagnétique, appelée parfois "lévitation" est un procédé connu en soi (voir, par exemple, le brevet FR 8202679 du 18.02.82 publié sous le no 2521797). Il est utilisé dans les laboratoires et l'industrie, par exemple pour la sustentation des rotors (paliers magnétiques), et en métallurgie pour la manutention de blocs métalliques (four pour traitements thermiques) ou de métaux liquides.

Pour obtenir une sustentation il faut, en principe, faire traverser par un champ magnétique alternatif une pièce qui, pour l'obtention d'un meilleur résultat, doit être aussi peu magnétique et aussi bonne conductrice de l'électricité que possible. Cette pièce présente souvent la forme d'une plaque horizontale, ou analogue. Au niveau de la pièce, ce champ a deux composantes perpendiculaires:

l'une verticale (parallèle à la pesanteur et perpendiculaire à la pièce) qu'on peut appeler composante "traversante" du champ, l'autre horizontale qu'on peut appeler "composante tangentielle" parcequ'elle est parallèle à la pièce.

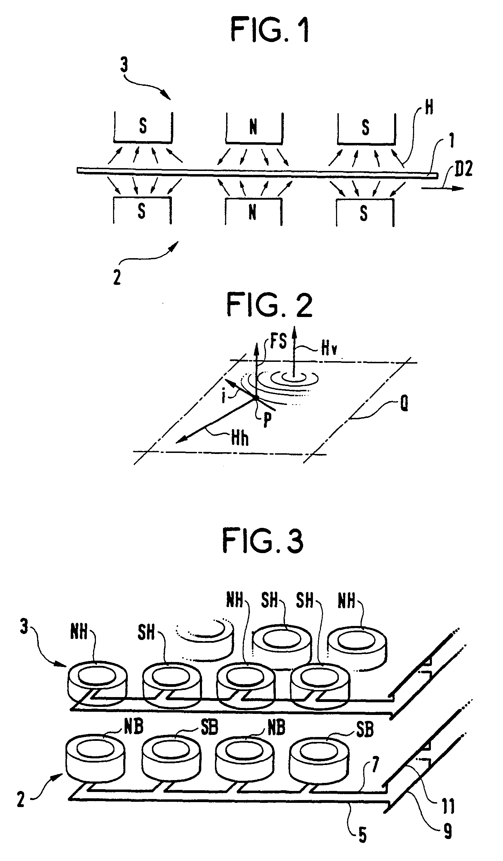

Le flux de la composante verticale traversante engendre dans la pièce des courants induits. Suivant la loi de Laplace, ces derniers coopèrent avec la composante tangentielle du champ pour créer des forces verticales. Si la géométrie du système est convenable, cette force s'oppose à la gravité et "sustente" la pièce. La figure 1 montre une vue en élévation d'un dispositif connu appliquant ce principe à une plaque de tôle relativement mince. On y voit:

en repère 1: la plaque à sustenter qui s'étend horizontalement entre deux réseaux de dispositifs ("pôles") générateurs de champs magnétiques

en repère 2: un réseau inférieur de pôles alternativement de polarité Nord repérés N et de polarité Sud repérés S, et

en repère 3: un réseau supérieur symétrique du précédent, les pôles de même polarité étant vis-à-vis, le champ magnétique créé étant représenté par des flèches H.

Il n'est pas indispensable en principe d'utiliser deux réseaux de pôles ni que, dans ce cas, les pôles en vis-à-vis soient de même polarité mais cette disposition donne un meilleur rendement au dispositif. En effet, si les pôles en vis à vis sont de polarités opposées, on privilégie excessivement le flux traversant qui entraîne alors un échauffement indésirable par pertes Joule dans la pièce sustentée.

La figure 2 représente un élément (ou "maille") appartenant à une plaque à sustenter, situé entre deux pôles en vis-à-vis, et correspondant à cette paire de pôles. Cet élément présente la forme d'un quadrilatère Q. Il est par exemple carré, et fait partie d'un réseau régulier bidimensionnel qui s'étend sur toute la surface de la plaque et résulte de la disposition régulière correspondante des pôles N et S. La composante traversante du champ Hv induit un courant i en un point P où la composante tangentielle du champ est Hh. Cette composante et ce courant créent, selon la loi de Laplace, une force verticale de sustentation FS appliquée en P. Si la plaque est équidistante des deux réseaux identiques de pôles, la composante traversante Hv est nulle (par symétrie) et la force FS aussi. La plaque se rapproche alors du réseau inférieur jusqu'à ce que les forces de sustentation telles que FS deviennent suffisamment importantes pour la soutenir.

Dans les dispositifs actuellement réalisés les pôles sont formés par des bobines parcourues par un courant excitateur et entourant éventuellement un circuit magnétique feuilleté: on désigne ici par "bobine" le dispositif bien connu constitué d'un conducteur électrique relativement fin enroulé en boucles (ou "spires") coaxiales plus ou moins nombreuses.

Les pôles sont disposés de manière adaptée à la forme de pièces à sustenter. Pour soutenir une plaque horizontale plane les pôles sont répartis sur et sous la plaque comme l'indique la figure 3. Les bobines du réseau inférieur 2 sont repérées NB et SB et celles du réseau supérieur 3, NH et SH respectivement.

On doit placer entre les bobines des fils de connection: les bobines NB et SB d'une même rangée sont par exemple connectées en série, par des fils tels que 5 et 7 affectés à cette rangée et euxmêmes connectés respectivement à des fils tels que 9 et 11 communs à toutes les rangées d'un même réseau.

Ces dispositifs utilisant des bobines présentent, sur le plan pratique, des inconvénients créés par l'encombrement du plan de pose et par leur fragilité vis à vis des agressions d'origines diverses auxquelles ils sont exposés:

Ces inconvénients sont notamment les suivants:

L'aire de sustentation, sur et sous la plaque, est fortement occupée par les bobines avec leurs fils de connection ce qui limite ou interdit la mise en place de dispositifs utiles (chauffage ou réfrigération, contrôle ou mesure...). Ceci est exprimé en disant que le dispositif est trop peu transparent.

Les bobines et fils de connection sont nécessairement réalisés en fils isolés par un vernis ou émail isolant, car ces fils se touchent et se croisent en de nombreux points. Ils constituent des ensembles relativement complexes et fragiles notamment en présence de plaques chaudes.

La présente invention vise à réaliser la sustentation magnétique en éliminant ces inconvénients grâce à un dispositif transparent et robuste. Et son objet peut être décrit, de manière d'abord générale, par les points suivants notamment:

1. Dispositif de sustentation électromagnétique pour supporter sans contact une pièce électriquement conductrice (1) au-dessus d'une aire de sustentation (AU) c'est-à-dire pour maintenir une distance entre cette pièce et cette aire contre l'action d'une force telle que la gravité qui pousse cette pièce vers cette aire, ce dispositif comportant:

une source de courant électrique alternatif d'excitation (G), au moins un conducteur électrique linéaire d'excitation (F) alimenté par cette source et parcourant ladite aire de sustentation au moins sous ladite pièce à sustenter, pour former dans cette aire un réseau bidimensionnel de pôles magnétiques (N, S), dont les lignes de champ magnétique s'éloignent de cette aire, ce réseau présentant une configuration analogue à celle d'un damier avec des cases en forme de quadrilatères (Q) juxtaposés, deux cases adjacentes par un côté commun étant occupées par deux pôles de polarités toujours opposées, l'un de ces pôles (N) étant Nord quand l'autre (S) est Sud et réciproquement, de manière à créer dans ladite pièce à sustenter (1) à la fois, d'une part, des composantes de champ magnétique traversantes, engendrant des courants parallèles à ladite aire, et d'autre part des composantes de champ magnétique tangentielles parallèles à cette aire et croisant ces courants pour engendrer des forces de sustentation (FS) perpendiculaires à cette aire,

ce dispositif étant caractérisé par le fait que ledit conducteur d'excitation (F) suit, dans ladite aire de sustentation, une succession de trajets en dents de scie, (T1, T2...T6) qui se succèdent selon une première direction (D1) et présentent chacun un axe moyen (A1) selon une seconde direction (D2) inclinée sur la première, de manière à couvrir au moins une partie substantielle de cette aire de sustentation, chaque dit trajet en dents de scie (T1) s'écartant de son axe alternativement dans un sens et dans l'autre, deux dits trajets en dents de scie consécutifs quelconques (T1, T2) constituant un trajet précédent (T1) et un trajet suivant (T2) et étant disposés de sorte que les points du trajet précédent qui se rapprochent le plus de l'axe (A2) du trajet suivant soient en regard des points du trajet suivant qui se rapprochent le plus de l'axe (A1) du trajet précédent, mais sans que ces deux trajets se croisent, deux tels points formant alors une zone de proximité maximale (P, J) entre les deux trajets, ces zones de proximité entre deux trajets se succédant selon ladite deuxième direction, ces deux trajets dessinant alors entre eux, au moins approximativement, selon cette deuxième direction, une rangée de dits quadrilatères situés chacun entre deux zones de proximité consécutives, la succession desdits trajets en dents de scie formant une succession de telles rangées de quadrilatères et formant en même temps au moins une partie dudit réseau bidimensionnel, les quadrilatères adjacents par un côté commun étant alignés selon une troisième (D3) et une quatrième (D4) directions présentant des obliquités opposées par rapport à n'importe laquelle des dites première et deuxième directions,

le courant électrique d'excitation parcourant ledit trajet suivant (T2) étant d'un sens opposé à celui du courant dans ledit trajet précédent (T1), de manière à former une rangée de pôles magnétiques (S) d'une même polarité dans la rangée de quadrilatères dessinés entre ces deux trajets (T1, T2), à former de même une rangée de pôles magnétiques (N) de la polarité opposée dans la rangée de quadrilatères suivante (T2, T3) et ainsi de suite alternativement, ce qui entraîne en même temps que lesdits pôles ont lesdites polarités toujours opposées dans deux dites cases adjacentes par un côté commun, et ce qui permet finalement de former ledit réseau de pôles avec une longueur de conducteur et un nombre de rencontres de conducteurs diminués.

2. Dispositif selon le point 1 caractérisé par le fait que ledit trajet précédent (T1) rejoint ledit trajet suivant (T2) dans une zone de jonction (J1) qui est une dite zone de proximité à une extrémité commune de ces deux trajets, ce trajet suivant rejoignant lui-même le trajet encore suivant (T3) dans une zone de jonction suivante (J2) qui est une zone de proximité à l'autre extrémité de ce trajet, et ainsi de suite, de manière à réaliser une connexion électrique des trajets successifs en série.

3. Dispositif selon le point 2 dans lequel un premier dit trajet (T1) est alimenté électriquement à partir d'une extrémité d'entrée (EE) de ce trajet d'un côté de ladite succession de trajets, et caractérisé par le fait que le nombre desdits trajets est pair, de sorte qu'un dernier trajet (T6) se termine du même côté de cette succession, un trajet supplémentaire (TS) partant de l'extrémité de sortie de ce dernier trajet, allant vers ladite extrémité d'entrée (EE) du premier trajet et étant également en dents de scie de part et d'autre d'un axe moyen (AS) qui s'étend selon ladite première direction (D1), ce trajet supplémentaire se rapprochant de chacune desdites zones de jonction (J2) de rang pair, sans contact électrique, et s'éloignant entre ces zones, et se terminant à une extrémité de sortie (ES) à côté de ladite extrémité d-entrée (EE), de manière à dessiner une colonne de quadrilatères supplémentaires dudit réseau bidimensionnel et à former des pôles magnétiques supplémentaires dans ladite aire de sustentation, avec une longueur minimale de conducteur et sans croisement.

4. Dispositif selon le point 1 caractérisé par le fait que lesdits quadrilatères sont des carrés dont les côtés sont orientés selon desdites troisième (D3) et quatrième (D4) directions à 45 degrés desdites première (D1) et deuxième (D2) directions, lesdits trajets (T1...T6) se succédant avec un pas égal à celui des dents de scie de chacun de ces trajets, de manière à constituer un dispositif de sustentation rectangulaire sur la surface et sur les bords duquel la pression de sustentation soit sensiblement constante.

5. Dispositif selon le point 4, appliqué à la sustentation d'une tole (1) défilant selon une direction de transfert, et caractérisé par le fait que cette direction de transfert (D2) constitue l'une desdites première (D1) et deuxième (D2) directions.

6. Dispositif selon le point 1 caractérisé par le fait qu'il comporte deux dits réseaux bidimensionnels de part et d'autre d'un intervalle pour le passage d'une pièce à sustenter, les pôles magnétiques de chaque polarité formés par l'un de ces réseaux étant en regard des pôles magnétiques de la même polarité formés par l'autre.

Le conducteur d'excitation utilisé selon la présente invention est d'une section relativement grande pour transporter un courant d'intensité plus élevé que les fils des dispositifs connus. Sa forte section est permise par l'absence de toute juxtaposition, superposition ou croisement. Elle contribue à la robustesse du dispositif. Cette absence de superposition ou croisement simplifie les problèmes d'isolement électrique. Le conducteur peut éventuellement être creux et parcouru par un courant d'eau de réfrigération.

A l'aide des figures schématiques ci-jointes on va décrire plus particulièrement ci-après, à titre d'exemple non limitatif, comment la présente invention peut être mise en oeuvre dans le cadre de l'exposé qui en a été donné ci-dessus. Lorsqu'un même élément est représenté sur plusieurs figures il y est désigné par le même signe de référence. Lorsqu'un de ces signes de référence a été employé ci-dessus c'était pour permettre de se référer à ces mêmes figures à titre d'exemple non limitatif. Il doit être compris que les éléments mentionnés peuvent être remplacés par d'autres éléments assurant les mêmes fonctions techniques.

La figure 1 représente une vue en élévation d'un dispositif de sustentation connu, comme précédemment indiqué, et en même temps d'un premier dispositif selon l'invention.

La figure 2 représente une vue en perspective pour montrer les directions de composantes de champ magnétique, celle d'un courant induit dans une plaque à sustenter, et celle d'une force de sustentation en résultant aussi bien dans le cas d'un dispositif connu que selon l'invention.

La figure 3 représente une vue en perspective d'un dispositif de sustentation connu.

La figure 4 représente une vue de dessus d'un réseau bidimensionnel de pôles du dispositif de la Fig 1 selon l'invention.

Les Fig 5 et 6 représentent des vues de dessus de deux réseaux bidimensionnels de pôles d'un deuxième et d'un troisième dispositifs selon l'invention, respectivement.

La Fig 7 représente une vue en perspective d'un réseau bidimensionnel de pôles d'un quatrième dispositif selon l'invention.

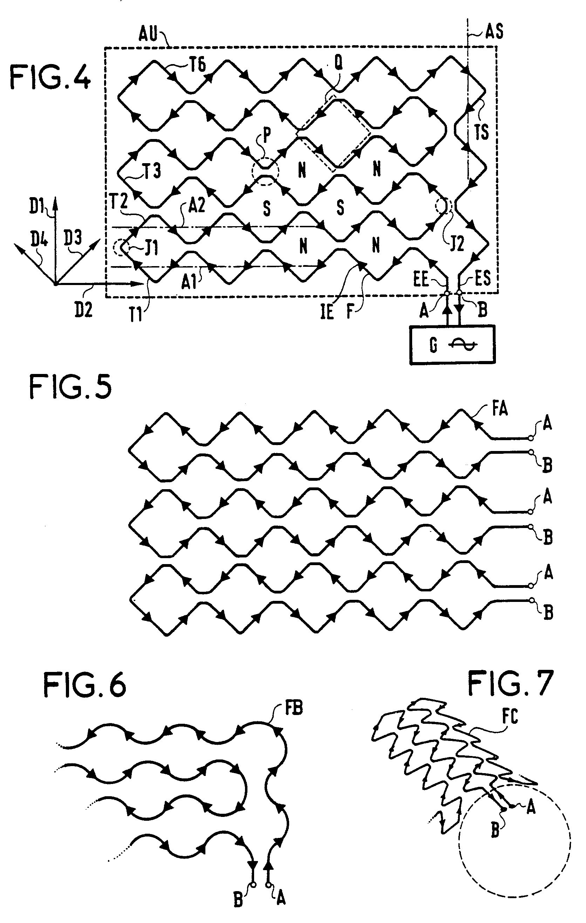

Comme précédemment indiqué un dispositif conforme à l'invention, est réalisé sous la forme d'un conducteur transportant le courant d'excitation et disposé en zig-zag sur l'aire de sustentation comme l'indique la figure 4. Ce dispositif correspond à l'ensemble des points 1 à 6 ci-dessus:

Conformément à cette figure, deux bornes d'entrée A et de sortie B du courant alternatif d'excitation sont placées à l'avant du bord latéral droit d'une aire de sustentation rectangulaire AU, ce bord étant parallèle à la direction du déplacement D2 de la plaque sustentée 1 de la Fig 1.

Le conducteur d'excitation F est plié, selon une ligne brisée dont les segments sont inclinés à 45° sur les bords de l'aire. On a représenté six trajets en dents de scie T1 à T6 se succédant sur toute la largeur de l'aire de sustentation; quand on a atteint l'autre bord latéral (le bord gauche) de cette aire, (à l' extrémité du trajet T6), on prolonge le conducteur, toujours en zig-zag, selon le bord avant pour achever de couvrir la longueur de l'aire jusqu'à revenir à la borne de sortie B voisine de A.

Il n'y a pas de contact entre les trajets successifs du conducteur F dans les zones de proximité p situées aux coins des quadrilatères approximativement dessinés par le conducteur plié.

Chaque quadrilatère tel que Q fonctionne, du point de vue électro-magnétique, comme une spire ainsi qu'il apparaît quand on observe les flèches telles que IE qui représentent le courant circulant dans le conducteur à un instant donné. Il engendre perpendiculairement au plan de la figure, sensiblement le même champ magnétique à la fréquence du courant excitateur que le ferait une bobine centrée à sa place. Il en résulte que le dispositif de la figure 4 crée le même réseau de pôles magnétiques que celui de la figure 3: les sens des champs magnétiques sont alternés en quinconce, comme représenté par les pôles N et S engendrés par la circulation du courant selon les flèches IE et sont toujours opposés pour deux quadrilatères adjacents.

Divers autres modes de réalisation de l'invention sont possibles. Certains de ces modes sont illustrés par les figures 5, 6 et 7 sur lesquelles les bornes d'entrée et de sortie du courant sont toujours repérées A et B, respectivement.

S'il est nécessaire, conformément à l'invention, que le conducteur F suive au moins approximativement les côtés des mailles d'un réseau de quadrilatères couvrant l'aire de sustentation sans contact entre brins adjacents (notamment aux coins des "quadrilatères"), il n'est pas nécessaire que la maille soit carrée; elle peut être en losange pour réaliser — de préférence quoique non nécessairement un nombre entier de tronçons recouvrant exactement l'aire de sustentation souhaitée; elle peut être curviligne comme celle formée par le conducteur FB représenté sur la figure 6. Il est opportun que la maille soit de forme régulière car ceci représente un avantage supplémentaire relativement à la disposition "en bobines" de figure 3. Le conducteur peut être plein, ou creux pour être intérieurement refroidi, ou filamentaire...; il peut recevoir une protection (émaillage), être fixé ou porté si nécessaire par des dispositifs isolants placés, par exemple, dans les zones de proximité P. Les bornes A et B peuvent être placées en un lieu quelconque; on peut en placer plusieurs couples comme représenté en fig 5 où le conducteur est repéré FA.

Conformément à l'invention, on peut sustenter une pièce non plane en lui adaptant une courbure de la surface d'un réseau bidimensionnel de pôles; on peut notamment sustenter un objet cylindrique en enroulant autour (ou à l'intérieur) un réseau formé par un conducteur FC sur un cylindre coaxial, conformément à la fig 7.

On peut aussi utiliser plusieurs réseaux superposés, sans ou avec noyaux magnétiques.

Un avantage de la présente invention tient au fait que les dispositifs de sustentation connus à bobines exigent très généralement une protection contre le rayonnement thermique des pièces sustentées et/ou contre le danger d'une chute de la pièce sur le dispositif en cas de panne de courant.

Cette protection est réalisée sous la forme d'un écran qui est disposé entre la pièce sustentée et les bobines et qui présente divers inconvénients:

Il limite fortement les possibilités d'observation de la surface de la pièce sustentée.

Il empêche pratiquement de la traiter par soufflage (eau, air)

La distance entre la pièce sustentée et les bobines (l'entrefer, qu'on a intérêt à minimiser) doit englober l'épaisseur de l'écran et de ses structures de support propres.

Il y a de plus des difficultés de réalisation de cet écran: Il doit en effet être transparent au flux magnétique, donc non métallique. Il est par exemple constitué de matériaux céramiques ou fibreux et porté par un dispositif qui le relie à la structure à travers les bobines.

Ces difficultés et inconvénients disparaissent avec le dispositif selon l'invention, dont la robustesse permet d'éliminer l'écran. L'entrefer devient égal à la "garde mécanique" c'est-à-dire à l'intervalle nécessaire pour laisser passer les irrégularités ou saillies éventuelles d'une pièce à traiter. Sa réduction permet de diminuer la consommation électrique du dispositif.

**Revendications**

1. Dispositif de sustentation électromagnétique pour supporter sans contact une pièce électriquement conductrice (1) au-dessus d'une aire de sustentation (AU) c'est-à-dire pour maintenir une distance entre cette pièce et cette aire contre l'action d'une force telle que la gravité qui pousse cette pièce vers cette aire, ce dispositif comportant:

une source de courant électrique alternatif d'excitation (G), au moins un conducteur électrique linéaire d'excitation (F) alimenté par cette source et parcourant ladite aire de sustentation au moins sous ladite pièce à sustenter, pour former dans cette aire un réseau bidimensionnel de pôles magnétiques (N, S), dont les lignes de champ magnétique s'éloignent de cette aire, ce réseau présentant une configuration analogue à celle d'un damier avec des cases en forme de quadrilatères (Q) juxtaposés, deux cases adjacentes par un côté commun étant occupées par deux pôles de polarités toujours opposées, l'un de ces pôles (N) étant Nord quand l'autre (S) est Sud et réciproquement, de manière à créer dans ladite pièce à sustenter (1) à la fois, d'une part, des composantes de champ magnétique traversantes engendrant des courants parallèles à ladite aire, et d'autre part des composantes de champ magnétique tangentielles parallèles à cette aire et croisant ces courants pour engendrer des forces de sustentation (FS) perpendiculaires à cette aire, ce dispositif étant caractérisé par le fait que ledit conducteur d'excitation (F) suit, dans ladite aire de sustentation, une succession de trajets en dents de scie, (T1, T2...T6) qui se succèdent selon une première direction (D1) et présentent chacun un axe moyen (A1) selon une seconde direction (D2) inclinée sur la première, de manière à couvrir au moins une partie substantielle de cette aire de sustentation, chaque dit trajet en dents de scie (T1) s'écartant de son axe alternativement dans un sens et dans l'autre, deux dits trajets en dents de scie consécutifs quelconques (T1, T2) constituant un trajet précédent (T1) et un trajet suivant (T2) et étant disposés de sorte que les points du trajet précédent qui se rapprochent le plus de l'axe (A2) du trajet suivant soient en regard des points du trajet suivant qui se rapprochent le plus de l'axe (A1) du trajet précédent, mais sans que ces deux trajets se croisent, deux tels points formant alors une zone de proximité maximale (P, J) entre les deux trajets, ces zones de proximité entre deux trajets se succédant selon ladite deuxième direction, ces deux trajets dessinant alors entre eux, au moins approximativement, selon cette deuxième direction, une rangée de dits quadrilatères situés chacun entre deux zones de proximité consécutives, la succession desdits trajets en dents de scie formant une succession de telles rangées de quadrilatères et formant en même temps au moins une partie dudit réseau bidimensionnel, les quadrilatères adjacents par un côté commun étant alignés selon une troisième (D3) et une quatrième (D4) directions présentant des obliquités opposées par rapport à n'importe laquelle des dites première et deuxième directions,

le courant électrique d'excitation parcourant ledit trajet suivant (T2) étant d'un sens opposé à celui du courant dans ledit trajet précédent (T1), de manière à former une rangée de pôles magnétiques (S) d'une même polarité dans la rangée de quadrilatères dessinés entre ces deux trajets (T1, T2), à former de même une rangée de pôles magnétiques (N) de la polarité opposé dans la rangée de quadrilatères suivante (T2, T3) et ainsi de suite alternativement, ce qui entraîne en même temps que lesdits pôles ont lesdites polarités toujours opposées dans deux dites cases adjacentes par un côté commun, et ce qui permet finalement de former ledit réseau de pôles avec une longueur de conducteur et un nombre de rencontres de conducteurs diminués.

2. Dispositif selon la revendication 1 caractérisé par le fait que ledit trajet précédent (T1) rejoint ledit trajet suivant (T2) dans une zone de jonction (J1) qui est une dite zone de proximité à une extrémité commune de ces deux trajets, ce trajet suivant rejoignant lui-même le trajet encore suivant (T3) dans une zone de jonction suivante (J2) qui est une zone de proximité à l'autre extrémité de ce trajet, et ainsi de suite, de manière à réaliser une connexion électrique des trajets successifs en série.

3. Dispositif selon la revendication dans lequel un premier dit trajet (T1) est alimenté électriquement à partir d,une extrémité d'entrée (EE) de ce trajet d'un côté de ladite succession de trajets, et caractérisé par le fait que le nombre desdits trajets est pair, de sorte qu'un dernier trajet (T6) se termine du même côté de cette succession, un trajet supplémentaire (TS) partant de l'extrémité de sortie de ce dernier trajet, allant vers ladite extrémité d'entrée (EE) du premier trajet et étant également en dents de scie, de part et d'autre d'un axe moyen (AS) qui s'étend selon ladite première direction (D1), ce trajet supplémentaire se rapprochant de chacune desdites zones de jonction (J2) de rang pair, sans contact électrique, et s'éloignant entre ces zones, et se terminant à une extrémité de sortie (ES) à côté de ladite extrémité d'entrée (EE), de manière à dessiner une colonne de quadrilatères supplémentaires dudit réseau bidimensionnel et à former des pôles magnétiques supplémentaires dans ladite aire de sustentation, avec une longueur minimale de conducteur et sans croisement.

4. Dispositif selon la revendication 1 caractérisé par le fait que lesdits quadrilatères sont des carrés dont les côtés sont orientés selon desdites troisième (D3) et quatrième (D4) directions à 45 degrés desdites première (D1) et deuxième (D2) directions, lesdits trajets (T1...T6) se succédant avec un pas égal à celui des dents de scie de chacun de ces trajets, de manière à constituer un dispositif de sustentation rectangulaire sur la surface et sur les bords duquel la pression de sustentation soit sensiblement constante.

5. Dispositif selon la revendication 4, appliqué à la sustentation d'une tole (1) défilant selon une direction de transfert, et caractérisé par le fait que cette direction de transfert (D2) constitue l'une desdites première (D1) et deuxième (D2) directions.

6. Dispositif selon la revendication 1 caractérisé par le fait qu'il comporte deux dits réseaux bidimensionnels de part et d'autre d'un intervalle pour le passage d'une pièce à sustenter, les pôles magnétiques de chaque polarité formés par l'un de ces réseaux étant en regard des pôles magnétiques de la même polarité formés par l'autre.

**Patentansprüche**

1. Elektronische Schwebeeinrichtung zum kontaktlosen Halten eines elektrische leitenden Körpers (1) über einer Schwebezone (AU), d.h. zum Einhalten eines Abstandes zwischen dem Körper und der Zone gegen die Einwirkung einer Kraft wie etwa der Schwerkraft, welche den Körper zur Zone hin drückt, wobei die Einrichtung aufweist:

eine elektrische Erregerwechselstromquelle (G), mindestens einen linearen elektrischen Erregerleiter, der von der Stromquelle gespeist wird und die Schwebezone mindestens unterhalb des in Schwebe zu haltenden Körpers unter Bildung eines zweidimensionalen Systems von Magnetpolen (N, S) durchläuft, deren magnetische Feldlinien sich von dieser Zone entferne, wobei das System eine Gestaltung besitzt, die einem Schachbrett aus Feldern aneinanderliegender Vierecke (A) ähnelt und zwei mit einer gemeinsamen Seite aneinandergrenzende Felder mit zwei Polen von stets entgegengesetzter Polarität besetzt sind, wovon einer der Pole (N) ein Nordpol ist, wenn der andere (S) ein Südpol ist, und umgekehrt, derart, daß in dem in Schwebe zu haltenden Körper (1) zugleich einerseits durchdringende Magnetfeldkomponenten, die Ströme parallel zur genannten Zone induzieren, und andererseits tangentiale Magnetfeldkomponenten erzeugt werden, die parallel zu der Zone verlaufen und die genannten Ströme zur Erzeugung von Schwebekräften (FS) senkrecht zu dieser Zone kreuzen,

wobei die Einrichtung dadurch gekennzeichnet ist, daß der Erregerleiter (F), in der Schwebezone entlang einer Folge von sägezahnförmigen Pfaden (T1, T2 ... T6) verläuft, die in einer ersten Richtung (D1) aufeinanderfolgen und jeweils eine mittlere Achse (A1) in einer gegen die erste Richtung geneigte Richtung besitzt, derart, daß sie mindestens einen erheblichen Abschnitt der Schwebezone bedecken, wobei sich jeder sägezahnförmige Pfad (T1) von seiner mittleren Achse abwechselnd in der einen und in der anderen Richtung entfernt und zwei beliebige aufeinanderfolgende sägezahnförmige Pfade (T1, T2) einen vorausgehenden Pfad (T1) und einen nachfolgenden Pfad (T2) bilden und derart angeordnet sind, daß die Punkte des vorausgehenden Pfades, die der Achse (A2) des nachfolgenden Pfades am nächsten kommen, denjenigen Punkten des nachfolgenden Pfades gegenüberstehen, die der Achse (A1) des vorausgehenden Pfades am nächsten kommen, jedoch ohne daß sich die beiden Pfade kreuzen, so daß zwei solcher Punkte eine Zone größter Nähe (P, J) zwischen den beiden Pfaden bilden und diese Zonen zwischen zwei pfaden in der genannten zweiten Richtung aufeinander folgen, wobei diese beiden Pfade miteinander in der zweiten Richtung zumindest annäherungsweise eine Zeile von Vierecken beschreiben, die jeweils zwischen zwei aufeinanderfolgenden Zonen größter Nähe gelegen sind, wobei die Folge der sägezahnförmigen Pfade eine Folge derartiger Viereckzeilen und gleichzeitig mindestens einen Abschnitt des zweidimensionalen Systems bildet und wobei die mit einer gemeinsamen Seite aneinandergrenzenden Vierecke in einer dritten (D3) und vierten (D4) Richtung ausgerichtet sind, die relativ zu einer beliebigen der ersten und zweiten Richtung jeweils einander gegenüberliegende Schräglagen besitzen;

wobei der den nachfolgenden Pfad (T2) durchfließende elektrische Erregerstrom eine der Richtung des Stroms im vorausgehenden Pfad umgekehrten Richtung (T1) besitzt, derart, daß eine Zeile magnetischer Pole (S) gleicher Polarität in der Zeile der zwischen diesen beiden Pfaden (T1, T2) umschriebenen Vierecke gebildet wird, und ebenso eine Zeile magnetischer Pole (N) entgegengesetzter Polarität in der nachfolgenden Zeile der Vierecke (T2, T3) gebildet wird, und abwechselnd so weiter, mit der gleichzeitigen Folge, daß die Pole in zwei mit einer gemeinsame Seite aneinandergrenzenden Feldern stets entgegengesetzte polarität besitzen, wodurch es schließlich möglich ist, das Polsystem mit einer verringerten Leiterlänge und Anzahl der Leiterbegegnungen zu bilden.

2. Einrichtung nach Anspruch 1, dadurch gekennzeichnet, daß der vorausgehende Pfad (T1) mit dem nachfolgenden Pfad (T2) wieder in einer Verbindungszone (J1), die eine sogenannte Nahzone eines gemeinsamen Endes der beiden Pfade ist, zusammenkommt, wobei dieser nachfolgende Pfad seinerseits mit dem dann nächstnachfolgenden Pfad (T3) wieder in einer nachfolgenden Verbindungszone (J2) zusammenkommt, die eine Nahzone des anderen Endes dieses Pfades ist, und so weiter, derart, daß eine elektrische Reihenschaltung der aufeinanderfolgenden Pfade gebildet wird.

3. Einrichtung nach Anspruch 2, bei der ein erster Pfad (T1) elektrisch von einem an einer Seite der Pfadfolge gelegenen Eingangsende (EE) des Pfades her gespeist wird, dadurch gekennzeichnet, daß die Anzahl der Pfade geradzahlig ist, derart, daß ein letzter Pfad (T6) auf der gleichen Seite der Pfadfolge endet, wobei ein zusätzlicher Pfad (TS) am Ausgangsende des letzten Pfades beginnt, zum Eingangsende (EE) des ersten Pfades verläuft und ebenfalls sägezahnförmig zu beiden Seiten einer mittleren Achse (AS) verläuft, die sich in der genannten ersten Richtung (D1) erstreckt, wobei sich der zusätzliche Pfad jeder der Verbindungszonen (J2) geradzahliger Pfade ohne elektrische Berührung nähert und an einem an der Seite des Eingangsendes (EE) gelegenen Ausgangsende (ES) endet, derart, daß eine Spalte zusätzlicher Vierecke des zweidimensionalen Systems beschrieben und zusätzliche magnetische Pole in der Schwebezone gebildet werden, bei minimaler Leiterlänge und ohne Kreuzung.

4. Einrichtung nach Anspruch 1, dadurch gekennzeichnet, daß die Vierecke Quadrate sind, deren Seiten in der genannten dritten (D3) und vierten Richtung (D4) um 45° gegen die erste (D1) und zweite (D2) Richtung geneigt sind, wobei die Pfade (T1 ... T6) mit einer Schrittweite aufeinander folgen, die derjenigen der Sägezähne dieser Pfade entspricht, derart, daß eine rechteckige Schwebeeinrichtung geschaffen wird, über deren Oberfläche und Rändern der Schwebedruck im wesentlichen konstant ist.

5. Einrichtung nach Anspruch 4, angewandt auf das-in-der-Schwebe-halten einer Platte (1), die sich in einer Transferrichtung bewegt, dadurch gekennzeichnet, daß die Transferrichtung (D2) eine der genannten ersten (D1) und zweiten (D2) Richtungen ist.

6. Einrichtung nach Anspruch 1, dadurch gekennzeichnet, daß sie zwei zweidimensionale Systeme zu beiden Seiten eines Raums für den Durchgang eines in der Schwebe zu haltenden Körpers aufweist, wobei die von einem der Systeme erzeugten Magnetpole jeder Polarität den vom anderen System erzeugten Magnetpolen derselben Polarität gegenüberstehen.

**Claims**

1. An electromagnetic levitation device for supporting an electrically conductive part (1) above a levitation area (AU) without making contact therewith, i.e. for maintaining a distance between said part and said area in spite of the action of a force such as the force of gravity tending to urge said part towards said area, said device comprising:

a source (G) of alternating excitation electric current,

at least one linear excitation electric conductor (F) fed from said source and running over said levitation area, at least beneath said part to be levitated in order to form in said area a two-dimensional array of magnetic poles (N, S), whose magnetic field lines extend away from said area, said array having a configuration analogous to that of a checkerboard with "squares" in the form of juxtaposed quadrilaterals Q, with two squares that are adjacent by a common side being occupied by poles of opposite polarity, one of said poles being a north pole (N) and the other being a south pole (S), and vice versa, so as to simultaneously create in said part (1) to be levitated both through magnetic field components inducing currents running parallel to said area, and also tangential magnetic field components in parallel to said area and intersecting said currents to generate levitation forces (FS) perpendicular to said area,

said device being characterized in that said excitation conductor (F) follows, in said levitation area, a succession of sawtooth paths (T1, T2,...,T6) which follow one another in a first direction (D1) and each of which has an average axis (A1) running along a second direction (D2) inclined relative to the first direction in such a manner as to cover at least a substantial portion of said levitation area, each of said sawtooth paths (T1) extending away from its axis alternately in one direction and then in the other, with any two consecutive ones of said sawtooth paths (T1, T2) constituting a preceding path (T1) and a succeeding path (T2) and being disposed so that the points on the preceding path which are closest to the axis (A2) of the succeeding path are opposite to the points of the succeeding path which are closest to the axis (A1) of the preceding path, but without said two paths crossing each other, with two of such points thus forming a zone of maximum proximity (P, J) between said two paths, said proximity zones between two paths being aligned along said second direction, and said two paths then at least approximately tracing out therebetween a row of said quadrilaterals running along said second direction, with each quadrilateral being situated between two consecutive proximity zones, the succession of said sawtooth paths forming a succession of such rows of quadrilaterals and simultaneously forming at least one portion of said two dimensional array, the quadrilaterals which are adjacent via a common side being aligned along third and fourth directions (D3, D4) sloping at opposite angles relative to either side of said first and second directions,

the excitation electric current running along said succeeding path (T2) in the opposite direction to the current running along said preceding path (T1), in such a manner as to form a row of magnetic poles of the same polarity (S) in the row of quadrilaterals traced between said two paths (T1, T2), and to form a similar row of magnetic poles of opposite polarity (N) in the next row of quadrilaterals (T2, T3), and so on in alternation, thereby simultaneously ensuring that said poles are always of said oposite polarities between any two squares which are adjacent by a common side, and that said array of poles is finally constituted by a reduced length of conductor and by a reduced number of encounters between conductors.

2. A device according to claim 1, characterized in that said preceding path (T1) joins said succeeding path (T2) in a junction zone (J1) which is one of said proximity zones located at a common end of said two paths, said succeeding path itself joining the next succeeding path (T3) in a succeeding junction zone (J2) which is a proximity zone at the other end of said path, and so on, so as to form a series electrical connection between the successive paths.

3. A device according to claim 2, wherein a first one of said paths (T1) is fed with electricity from an inlet end (EE) of said path at one side of said succession of paths, and characterized in that the number of said paths is even so that a last path (T6) terminates at the same side of said succession, with an additional path (TS) running from the outlet end of said last path towards said inlet end (EE) of the first path and likewise having a sawtooth configuration on either side of an average axis (AS) which extends along said first direction (D1), said additional path coming close to each of said even numbered junction zones (J2) but without making electrical contact therewith, and moving away in between said zones, and terminating at an outlet end (ES) next to said inlet end (EE) so as to trace out a column of additional quadrilaterals in said two-dimensional array and to form additional magnetic poles in said levitation area, while using a minimal length of conductor and without having any crossings.

4. A device according to claim 1, characterized in that said quadrilaterals are square having their sides oriented along said third and fourth directions (D3, D4) which are at 45° to said first and second directions (D1, D2), said paths (T1, ..., T6) succeeding one another at a pitch equal to the pitch of the sawteeth along each of said paths, thereby constituting a rectangular levitation device on said area with substantially constant levitation force along the edges thereof.

5. A device according to claim 4, applied to levitating a metal sheet (1) running along a transfer direction, and characterized in that said transfer direction (D2) constitutes one of said first and second directions (D1, D2).

6. A device according to claim 1, characterized in that it includes two of said two-dimensional arrays on either side of a gap through which the part to be levitated passes, the magnetic poles of each polarity formed by either one of these arrays being located opposite to magnetic poles of the same polarity formed by the other one of said arrays.

# FIG. 1

# FIG. 2

# FIG. 3

1

FIG.4

FIG.5

FIG.6

FIG.7